# EUROPEAN PATENT APPLICATION

(11) **EP 4 000 392 A1**
(43) Date of publication of application: **25.05.2022**
(21) Application number: 20840279.2
(22) Date of filing: 14.07.2020
(51) Int. Cl.: A01K 61/00, G05B 19/418, A01G 7/00, A01K 29/00

(54) **PRODUCE MANAGEMENT SYSTEM**

(30) Priority: 16.07.2019 JP 2019131051
(71) Applicant: NGK SPARK PLUG CO., LTD., Nagoya-shi, Aichi 467-8525 (JP)
(72) Inventor: TAKEHIRO, Yoji, Nagoya-shi, Aichi 467-8525 (JP); SAITO, Miyuki, Nagoya-shi, Aichi 467-8525 (JP); TAKENOSHITA, Koyo, Tokyo 105-0001 (JP); YOSHIDA, Isamu, Tokyo 105-0001 (JP); NISHIMURA, Ryoji, Tokyo 105-0001 (JP); YAMASAKI, Yusuke, Tokyo 105-0001 (JP)
(74) Representative: Grünecker Patent- und Rechtsanwälte PartG mbB
(86) International application number: PCT/JP2020/027384
(87) International publication number: WO 2021/010398

(57) **Abstract**

In a produce management system (1), a production-location-side device (10) outputs management data that is generated or inputted during the process of growing the produce at a production location. When the management data is acquired, a management-location-side device (70) stores or outputs at least one of the management data, related information generated during processing or inspection of the management data, and authentication information generated in accordance with acquisition of the management data.

## Description

### TECHNICAL FIELD

The present invention relates to a produce management system.

### BACKGROUND ART

Patent Literature 1 discloses a closed circulating culturing system as one example of a system for breeding produce. In the culturing system of Patent Literature 1, an electrolytic treatment line is connected to a culturing water tank, and an inverter power supply is controlled by a controller in response to electric signals from a PH sensor, an ammonia sensor, and a nitric acid sensor for culturing water. In this manner, the disclosed system automatically controls the processing performance of an AC electrolytic treatment apparatus, thereby realizing efficient, low cost culturing of fish and shellfish.

### CITATION LIST

### PATENT LITERATURE

Patent Literature 1: Japanese Patent Application Laid-Open (kokai) No. 2003-52275

### SUMMARY OF INVENTION

### TECHNICAL PROBLEM

In the case where produce is bred by introducing a breeding system (for example, a culturing system) at a production base, the quality of produce may change greatly depending on a method of operating the system, the working conditions of a worker, a breeding environment, etc. However, in conventional breeding systems, including the system disclosed in Patent Literature 1, a piece of information objectively showing whether or not proper operation is performed at the production base cannot be grasped outside the production base.

The present invention has been accomplished so as to solve at least partially the above-described problem and its object is to provide a produce management system in which a piece of information for judging whether or not produce is bred properly at a production base can be obtained at a location different from the production base.

### SOLUTION TO PROBLEM

A produce management system, which is one aspect of the present invention, is a produce management system for managing breeding of produce, comprising:
a production-base-side apparatus which is provided at a production base for the produce and outputs data; and
a management-base-side apparatus which is provided at a management base and obtains the data, wherein
the production-base-side apparatus outputs management data generated or input in a process of breeding the produce at the production base, and
the management-base-side apparatus stores or outputs at least one of the management data, a piece of relevant information generated as a result of processing or inspection of the management data, and a piece of certification information generated in response to reception of the management data, when the management-base-side apparatus obtains the management data.

In the above-described produce management system, the production-base-side apparatus outputs "management data generated or input in a process of breeding produce at the production base," and the management-base-side apparatus obtains the management data output by the production-base-side apparatus. Therefore, it becomes possible to manage, at the management base, the data generated in the process of breeding the produce at the production base. Notably, the management data may be transmitted from the production-base-side apparatus directly to the management-base-side apparatus and directly received by the management-base-side apparatus. Alternatively, the production-base-side apparatus may upload (output) the management information to a storage, a database, a server, or the like by utilizing cloud computing, and the management-base-side apparatus may obtain the management data from the storage, the database, the server, or the like by downloading or browsing the management data.

When the management-base-side apparatus obtains the above-described management data, the management-base-side apparatus stores or outputs at least one of the "management data," "relevant information generated as a result of processing or inspection of the management data," and "certification information generated in response to reception of the management data."

In the case where the management data themselves which are output from the production base side in association with breeding of the produce at the production base, the above-described relevant information, or the above-described certification information is stored in the management-base-side apparatus, it is possible to accumulate in the management-base-side apparatus pieces of information for judging whether or not the breeding of the produce is properly performed at the production base. Similarly, by outputting the management data themselves, the above-described relevant information, or the above-described certification information from the management-base-side apparatus, it is possible to allow an apparatus which receives the output or a person who receives the output to obtain the pieces of information for judging whether or not the breeding of the produce is properly performed at the production base.

In either case, it becomes possible to manage the management data transmitted from the production base, the relevant information, or the certification information on the management base side independently of the production base, which is advantageous for certifying that the breeding of the produce is performed properly at the production base or taking some actions on the basis of the management data (for example, issuance of an instruction to the production base, analysis and study of the management data, etc.).

In the above-described produce management system, the management-base-side apparatus may include a judgment section which judges whether or not the obtained management data satisfy a standard condition set beforehand, and a processing section which transmits a work instruction to the production-base-side apparatus when the judgment section judges that the management data do not satisfy the standard condition.

In the case where the management-base-side apparatus has the above-described judgment section and the above-described processing section as described above, it is possible to judge at the management base whether or not the management data satisfy the standard condition and to provide a work instruction to the production base when the management data do not satisfy the standard condition. Therefore, at the production base, it is possible to correct matters associated with breeding in accordance with this work instruction, thereby optimizing the matters associated with production.

In the above-described produce management system, the production-base-side apparatus may include a second judgment section which judges whether or not the management data satisfy a standard condition set beforehand, and a second processing section which outputs a work instruction when the second judgment section judges that the management data do not satisfy the standard condition.

In the case where the production-base-side apparatus has the above-described second judgment section and the above-described second processing section as described above, it is possible to judge, at the production base, whether or not the management data satisfy the standard condition and provide a work instruction to another apparatus within the production base when the management data do not satisfy the standard condition. Therefore, even in the case where a network between the management-base-side apparatus and the production-base-side apparatus is interrupted due to, for example, a malfunction of the communication environment, it is possible to provide a work instruction from the production-base-side apparatus to another apparatus within the production base.

In the above-described produce management system, the work instruction may include at least one instruction selected from instructions for feeding, feeding amount adjustment, water exchange, water pouring, exchange or cleaning of a filter, adjustment of dissolved oxygen amount, supply of mineral components, supply of microorganisms, water temperature adjustment, water flow adjustment, and checking of the physique of aquatic produce.

In the case where the above-described instruction (an instruction selected from instructions for feeding, feeding amount adjustment, water exchange, water pouring, exchange or cleaning of a filter, adjustment of the dissolved oxygen amount, supply of mineral components, supply of microorganisms, water temperature adjustment, water flow adjustment, and checking of the physique of aquatic produce) can be provided from the management base to the production base when the management data do not satisfy the standard condition, it becomes possible to correct the produce breeding environment, and it becomes more easier to optimize the production at the production base.

In the above-described produce management system, the management data may include at least one kind of data selected from a physical or chemical parameter, working conditions of a worker, a work report, and breeding environment conditions.

In the case where the management data contain such kind of data, it becomes possible to obtain on the management base side at least one element selected from the physical or chemical parameter generated in the process of breeding the produce at the production base, the working conditions of the worker, the work report, and the breeding environment conditions, thereby enabling management of that element on the management base side. For example, in the case where the management data contain the "physical or chemical parameter generated in the process of breeding the produce at the production base," the parameter itself, a piece of relevant information generated as a result of processing or inspection of the parameter, or a piece of certification information generated in response to receipt of the parameter can be used as "information for judging whether or not breeding of the produce is performed properly at the production base." The obtained information for judgment is more useful for certifying that breeding of the produce is performed properly at the production base, providing an instruction to the production base on the basis of the management data, and performing analysis and study of the management data, etc. In the case where the management data contain the working conditions, the work report, the breeding environment conditions, etc., these management data can be used as evidence for proving that the produce has be bred under proper conditions, whereby a procedure of application to a certification body which certifies the safety and quality of the produce can be performed reliably and simply.

The above-described produce management system may comprise a plurality of production-base-side apparatuses. The plurality of production-base-side apparatuses may be provided at a plurality of production bases, respectively.

In the case where the production-base-side apparatus is provided at each of the plurality of production bases, it is possible to send the management data from each of the plurality of production bases to the management base, and, at the management base, the management data sets can be managed collectively independently of each production base.

### ADVANTAGEOUS EFFECTS OF INVENTION

According to the present invention, it is possible to obtain, at a location different from a production base, a piece of information for judging whether or not breeding of produce is properly performed at the production base.

### BRIEF DESCRIPTION OF DRAWINGS

[FIG. 1] FIG. 1 is an explanatory diagram conceptually showing a produce management system of a first embodiment.
[FIG. 2] FIG. 2 is an explanatory diagram conceptually showing a production system used at a production base.
[FIG. 3] FIG. 3 is a block diagram conceptually showing the electrical configuration of a production-base-side apparatus.
[FIG. 4] FIG. 4 is a block diagram conceptually showing the electrical configuration of a management-base-side apparatus.
[FIG. 5] FIG. 5 is an explanatory table used for conceptually describing management data generated at each time.
[FIG. 6] FIG. 6 is an explanatory table used for conceptually describing a specific example of the management data generated at each time.
[FIG. 7] FIG. 7 is an explanatory table used for conceptually describing pieces of information in which a standard condition and an instruction are related to each other for each item.
[FIG. 8] FIG. 8 is an explanatory table showing example results of judgment performed by the management base-side apparatus for judging whether or not each item in each management data set satisfies a standard condition.

### DESCRIPTION OF EMBODIMENTS

### <First embodiment

### 1. Outline of produce management system

A first embodiment will be described with reference to the drawings.

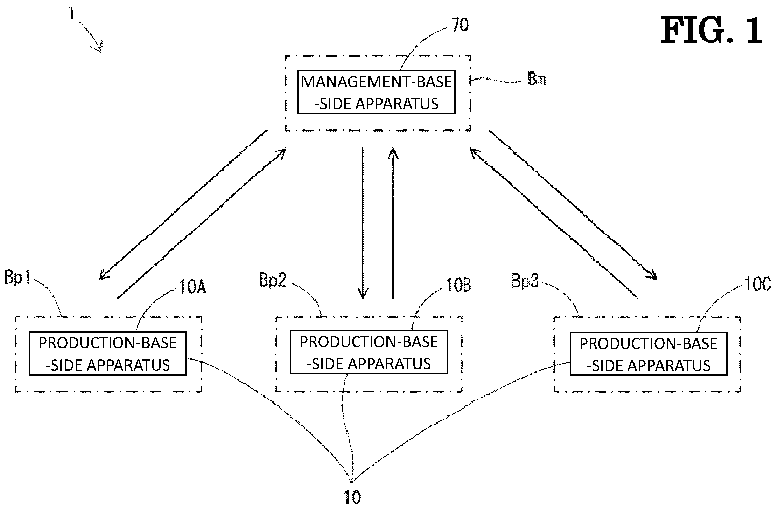

A produce management system 1 shown in FIG. 1 is a system for managing breeding of produce. Notably, in the following description, breeding of an aquatic organism is mentioned as one example of breeding of produce, and an example in which the produce management system 1 is a management system for managing breeding of the aquatic organism will be described.

The produce management system 1 is configured as a management system for managing, for example, land-based culture of a crustacean. The produce management system 1 includes a plurality of production-base-side apparatuses 10 and a management-base-side apparatus 70. Each of the plurality of production-base-side apparatuses 10 is provided at a corresponding production base. The following is description of an example in which, as shown in FIG. 1, three production-base-side apparatuses 10A, 10B, and 10C are provided at production bases Bp1, Bp2, and Bp3, respectively, and the management-base-side apparatus 70 is provided at a management base Bm.

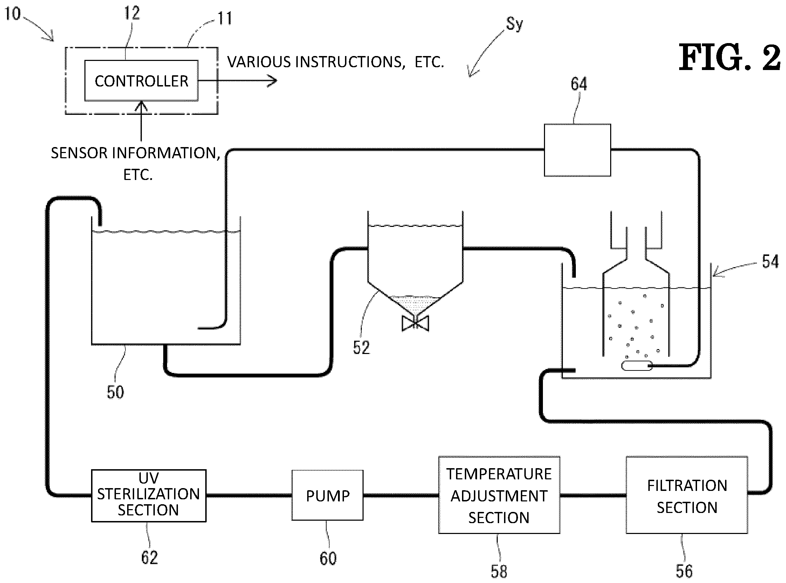

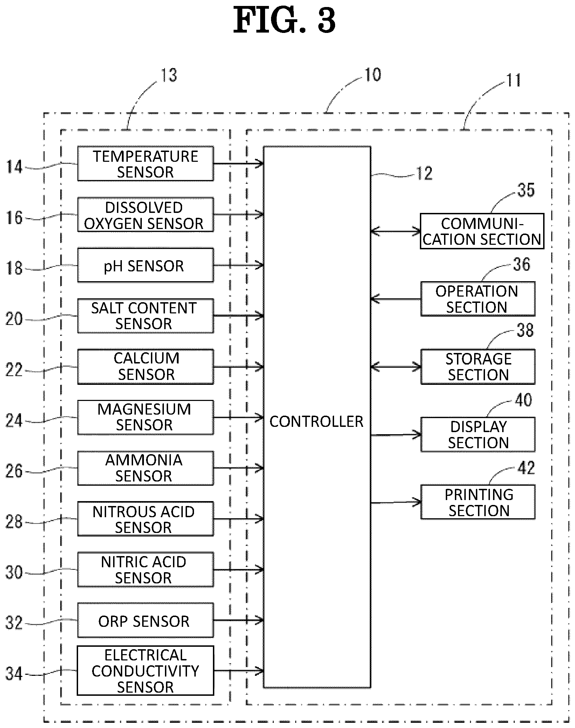

Each of the production bases Bp1, Bp2, and Bp3 is a site where produce is produced; i.e., a place where production of the produce is performed. A production system Sy as shown in FIG. 2 is provided at each production base, and the production system Sy includes the production-base-side apparatus 10 as shown in FIG. 3. Each of the three production-base-side apparatuses 10A, 10B, and 10C shown in FIG. 1 is configured in the same manner as the production-base-side apparatus 10 shown in FIG. 3 and is configured to be capable of transmitting information.

The production system Sy provided at each of the production bases Bp1, Bp2, and Bp3 is configured, for example, in the form of a closed-circulating-type land-based aquaculture system as shown in FIG. 2. The aquaculture system Sy shown in FIG. 2 includes the production-base-side apparatus 10, a breeding tank 50, a sedimentation tank 52, a bubble separation tank 54, a filtration section 56, a temperature adjustment section 58, a pump 60, a UV sterilization section 62, an oxygen supply apparatus 64, etc. The breeding tank 50 is a water tank in which breeding water is stored and an aquatic organism is bred. The sedimentation tank 52 is a tank in which solid substances contained in the breeding water are sedimented for solid liquid separation. The bubble separation tank 54 is a layer in which bubbles (air bubbles) are generated by a bubble separation apparatus and contaminants in the breeding water are caused to adhere to the bubbles for separation. The filtration section 56 is a facility for filtering the breeding water and includes, for example, a tank which enables successive performance of physical filtration and biological filtration. The temperature adjustment section 58 is a facility for adjusting the temperature of the breeding water and is configured, for example, in the form of a tank which can heat and cool the breeding water. The pump is a pump for circulating the breeding water. The UV sterilization section 62 is a facility for sterilizing the flowing breeding water by using a UV germicidal lamp. The oxygen supply apparatus 64 is an apparatus for supplying oxygen into the breeding tank 50 so as to optimize the amount of oxygen dissolved in the breeding water.

As shown in FIG. 3, the production-base-side apparatus 10 includes an information processing apparatus 11 and a sensor group 13 and is configured as an apparatus which can transmit pieces of information to the management-base-side apparatus 70, which will be described later, and receive pieces of information from the management-base-side apparatus 70, through a communication network. In the present embodiment, transmission and reception of pieces of information between the production-base-side apparatus 10 and the management-base-side apparatus 70 are performed through a communication network. However, the method of outputting pieces of information and obtaining the pieces of information is not limited thereto. Output and obtainment of pieces of information may be performed by utilizing cloud computing; specifically, the production-base-side apparatus 10 may upload a piece of information to a storage, a database, a server, or the like, and the management-base-side apparatus 70 may download or browse the piece of information. The information processing apparatus 11 is configured, for example, in the form of a computer and mainly includes a controller 12, a communication section 35, an operation section 36, a storage section 38, a display section 40, a printing section 42, etc. The controller 12 is an information processing apparatus including a CPU and can perform various types of computations, controls, and information processing. The communication section 35 is an apparatus which performs wired communication or wireless communication with an external apparatus in accordance with a known scheme. The operation section 36 includes known input devices such as a keyboard, a mouse, a touch panel, etc. The display section 40 is a known display apparatus such as a display. The printing section 42 is a known printing apparatus such as a printer. Notably, in the present embodiment, the information processing apparatus 11 is a stationary apparatus such as a computer. However, the information processing apparatus 11 is not limited thereto and may be a potable apparatus such as a smartphone or a tablet.

The sensor group 13 includes a temperature sensor 14, a dissolved oxygen sensor 16, a pH sensor 18, a salt content sensor 20, a calcium sensor 22, a magnesium sensor 24, an ammonia sensor 26, a nitrous acid sensor 28, a nitric acid sensor 30, a redox potential sensor 32 (hereinafter also referred to as the ORP sensor 32), an electrical conductivity sensor 34, a water level sensor, etc. The temperature sensor 14 has a configuration that enables detection of temperature at one or more locations in the system Sy and detects, for example, the temperature of breeding water within the breeding tank 50. The dissolved oxygen sensor 16 detects the dissolved oxygen concentration of the breeding water within the breeding tank 50. The pH sensor 18 detects the pH of the breeding water within the breeding tank 50. The salt content sensor 20 detects the salinity concentration of the breeding water within the breeding tank 50. The calcium sensor 22 detects the calcium concentration of the breeding water within the breeding tank 50. The magnesium sensor 24 detects the magnesium concentration of the breeding water within the breeding tank 50. The ammonia sensor 26 detects the ammonia concentration of the breeding water within the breeding tank 50. The nitrous acid sensor 28 detects the nitrous acid concentration of the breeding water within the breeding tank 50. The nitric acid sensor 30 detects the nitric acid concentration of the breeding water within the breeding tank 50. The ORP sensor 32 detects the oxidation-reduction potential of the breeding water within the breeding tank 50. The electrical conductivity sensor 34 detects the electrical conductivity of the breeding water within the breeding tank 50. The water level sensor is disposed in the breeding tank 50 and detects the level of water. Notably, each sensor may have only one detection section for detecting a detection target or a plurality of detection sections for detecting detection targets.

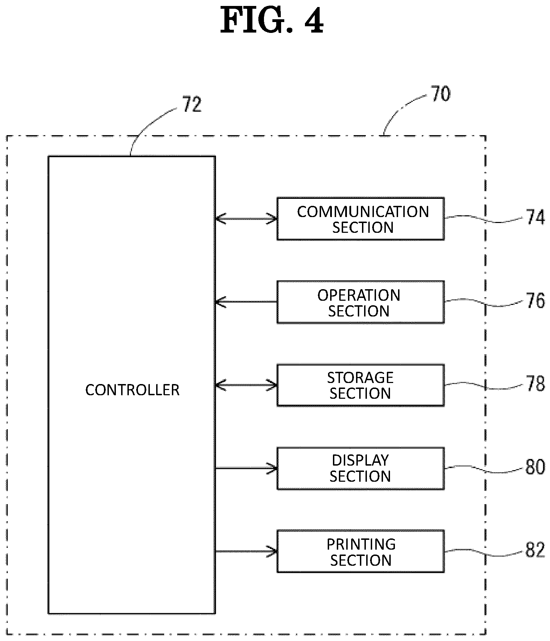

The management base Bm is a base where pieces of information are obtained from the production bases Bp1, Bp2, and Bp3 and management of the pieces of information is performed. The management base Bm is present at, for example, a location remote from the production bases Bp1, Bp2, and Bp3. The management-base-side apparatus 70 as shown in FIG. 4 is provided at the management base Bm, and the management-base-side apparatus 70 is configured to be capable of receiving pieces of information from the production-base-side apparatuses 10A, 10B, and 10C. Notably, there may be employed a configuration in which pieces of information are uploaded from the production bases Bp1, Bp2, and Bp3 to a server on the internet, and the management-base-side apparatus 70 downloads or browses the pieces of information uploaded to the server.

The management-base-side apparatus 70 is configured, for example, in the form of a computer and mainly includes a controller 72, a communication section 74, an operation section 76, a storage section 78, a display section 80, a printing section 82, etc. The controller 72 is an information processing apparatus including a CPU and can perform various types of computations, controls, and information processing. The communication section 74 is an apparatus which performs wired communication or wireless communication with an external apparatus in accordance with a known scheme. The operation section 76 includes known input devices such as a keyboard, a mouse, a touch panel, etc. The display section 80 is a known display apparatus such as a display. The printing section 82 is a known printing apparatus such as a printer. Notably, in the present embodiment, the management-base-side apparatus 70 is a stationary apparatus such as a computer. However, the management-base-side apparatus 70 is not limited thereto and may be a potable apparatus such as a smartphone or a tablet.

### 2. Operation at production base

Next, operation at each production base will be described in detail.

At each production base, production of produce is performed by the production system Sy.

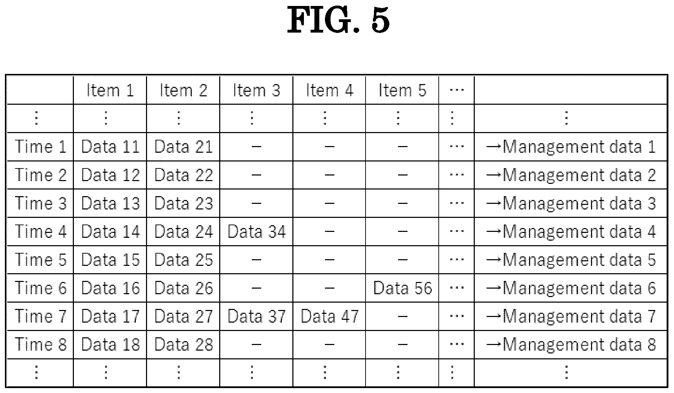

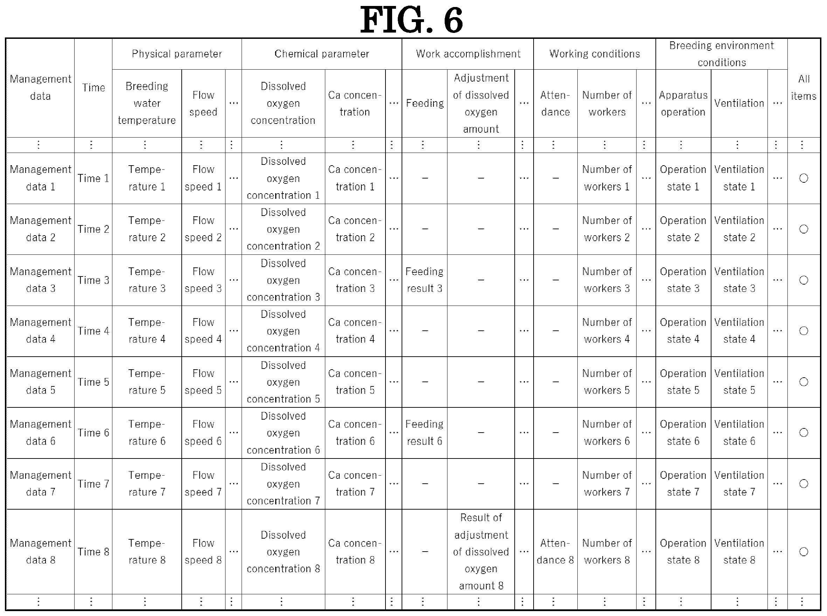

In the production system Sy, a plurality of types of items to be recorded (items for which data are input) when produce is produced are determined, and data regarding the items are input to the controller 12. Notably, data may be automatically input to the controller 12 by the sensors of the sensor group 13 or other apparatuses, or a worker may manually input data by operating the operation section 36. Both the automatic input method and the manual input method may be used in combination. Furthermore, in the case where a piece of information representing the relation between the worker and input data is also input, it is possible to link the worker to a work performed by the worker, thereby making it possible to utilize the link to improve the work. Also, the data input timing is determined for the respective items on an item-by-item basis and varies among the respective items; for example, an item for which data are input every day, an item for which data are input every several hours, an item for which data are input every several tens of minutes, an item for which data are input every several days, an item for which data are input by the worker at an arbitrary timing, and an item for which data are input when a predetermined condition is satisfied. Needless to say, data may be input at timings other than these timings, or data may be continuously input at all times. In an example of FIG. 5, items to be recorded (items for which data are input) are denoted by Item 1, Item 2, Item 3, Item 4, Item 5, etc. In the case where data of one or more items are input at timings denoted by Time 1, Time 2, Time 3, Time 4, etc., management data are generated at the respective timings; i.e., Time 1, Time 2, Time 3, Time 4, etc. FIG. 5 conceptually shows the management data generated at the respective timings. For example, data of Item 1 (data 11) and data of Item 2 (data 21) at Time 1 are input at Time 1, and these data sets are handled as Management data 1. Similarly, data of Item 1 (data 14), data of Item 2 (data 24), and data of Item 3 (data 34) at Time 4 are input at Time 4, and these data sets are handled as Management data 4. In FIG. 5, the management data generated at each time are shown abstractly. However, the management data generated at each time may be specifically determined as shown in FIG. 6.

Specifically, the items which are recorded in the production-base-side apparatus 10 (items for which data are input) include items of physical parameters such as the temperature of the breeding water, the flow speed of the breeding water, the temperature of the outside air, the humidity of the outside air, the oxidation-reduction potential of the breeding water, and the electrical conductivity of the breeding water. Data of these items are input to the controller 12, at timings determined for the respective items, as a result of input from the sensors which detect the values of the respective items or as a result of manual data input performed by the worker by operating the operation section 36. Notably, in FIG. 6, the temperature of the breeding water and the flow speed of the breeding water are shown as examples of the items of physical parameters, and FIG. 6 shows an example in which these parameters are input at each time.

Also, the items which are recorded in the production-base-side apparatus 10 (items for which data are input) include items of chemical parameters such as the dissolved oxygen concentration of the breeding water, the pH of the breeding water, the salinity concentration of the breeding water, the calcium concentration of the breeding water, the magnesium concentration of the breeding water, the ammonia concentration of the breeding water, the nitrous acid concentration of the breeding water, and the nitric acid concentration of the breeding water. Data of these items are input to the controller 12, at timings determined for the respective items, as a result of input from the sensors which detect the values of the respective items or as a result of manual data input performed by the worker by operating the operation section 36. Notably, in FIG. 6, the dissolved oxygen concentration of the breeding water and the calcium concentration (Ca concentration) of the breeding water are shown as examples of the items of chemical parameters, and FIG. 6 shows an example in which these parameters are input at each time.

Furthermore, the items which are recorded in the production-base-side apparatus 10 (items for which data are input) include items of work accomplishment such as feeding, feeding amount adjustment, water exchange, water pouring, exchange or cleaning of a filter, adjustment of the dissolved oxygen amount, various types of cleaning, supply of mineral components, supply of microorganisms, water temperature adjustment, water flow adjustment, and checking of the physique of aquatic produce. Data regarding these items (for example, data representing whether or not the work of each item has been performed) are input to the controller 12, for example, at timings determined for the respective items or at arbitrary timings, as a result of automatic input from apparatuses or as a result of manual data input performed by the worker by operating the operation section 36. Notably, in FIG. 6, feeding and adjustment of the dissolved oxygen amount are shown as examples of the items of work accomplishment, and FIG. 6 shows an example in which the results of these works are input at each time.

Furthermore, the items which are recorded in the production-base-side apparatus 10 (items for which data are input) include items of working conditions such as working hours, clock-in time, clock-out time, and overtime hours of each worker, the number of workers, and the presence/absence of a manager. Data regarding these items are input to the controller 12 at timings determined for the respective items or at arbitrary timings, as a result of automatic input from apparatuses (for example, apparatuses of an entrance and exit management system or an attendance management system) or as a result of manual data input performed by the worker by operating the operation section 36. Notably, in FIG. 6, attendance and the number of workers at each time are shown as examples of the items of working conditions, and FIG. 6 shows an example in which data specifying these contents are input at each time.

Furthermore, the items which are recorded in the production-base-side apparatus 10 (items for which data are input) include items of breeding environment conditions such as whether or not each apparatus operates normally, whether or not a window and a door are in proper states, whether or not ventilation is performed, and whether or not lights are on. Data regarding these items are input to the controller 12, at timings determined for the respective items or at arbitrary timings, as a result of automatic input by apparatuses or as a result of manual data input performed by the worker by operating the operation section 36. Notably, in FIG. 6, the state of apparatus operation and the state of ventilation are shown as examples of the items of breeding environment conditions, and FIG. 6 shows an example in which data specifying these contents are input at each time.

As described above, in the production system Sy, various management data generated or input in the process of breeding produce at the production base are obtained by the production-base-side apparatus 10 provided at that production base. Then, the production-base-side apparatus 10 transmits the obtained management data to the management-base-side apparatus 70. The production-base-side apparatus 10 may transmit the management data to the management-base-side apparatus 70, for example, every predetermined time (for example, every other day, every several hours, etc.), every time data are input, or at an arbitrary timing determined by a worker. Notably, the management data include data based on the data of the respective items, for example, judgment results obtained by judging whether or not data of the respective items obtained by the production-base-side apparatus 10 satisfy standard conditions determined for the respective items.

In the following description, there will be described an example in which the production-base-side apparatus 10 transmits the accumulated management data to the management-base-side apparatus 70 every time a certain period of time elapses. In this example, the data obtained by the production-base-side apparatus 10 during the certain period of time from the previous management data transmission and the next management data transmission are transmitted together by the production-base-side apparatus 10 at the timing of the next management data transmission. For example, in the example of FIG. 6, the production-base-side apparatus 10 transmits the data of the respective items input to the controller during the period between Time 1 and Time 2 to the management-base-side apparatus as management data of Time 2 (Management data 2). Similarly, the production-base-side apparatus 10 transmits the data of the respective items input to the controller during the period between Time 2 and Time 3 to the management-base-side apparatus as management data of Time 3 (Management data 3). In this manner, management data are transmitted from the production-base-side apparatus 10 to the management-base-side apparatus. Notably, in the case where data cannot be transmitted from the production-base-side apparatus 10 to the management-base-side apparatus 70 because of, for example, a malfunction of the communication environment, it is only necessary for the production-base-side apparatus 10 to transmit the data to the management-base-side apparatus 70 when the malfunction of the communication environment is fixed.

### 3. Management at the management base

Every time management data are transmitted from the production-base-side apparatus 10 to the management-base-side apparatus 70, the management-base-side apparatus 70 receives the transmitted management data. For example, in the case where Management data 1, Management data 2, Management data 3, Management data 4, etc. as shown in FIG. 6 are sequentially transmitted from the production-base-side apparatus 10 to the management-base-side apparatus 70, the management-base-side apparatus 70 sequentially receives these management data sets and stores them in the storage section 78 as the same data as those of FIG. 6 (accumulated data of Management data 1, Management data 2, Management data 3, Management data 4, etc.). Every time the management-base-side apparatus 70 receives management data, the management-base-side apparatus 70 inspects the received management data. Specifically, every time the management-base-side apparatus 70 receives management data, the management-base-side apparatus 70 judges whether or not data of the respective items contained in the received management data satisfy the standard conditions determined for the respective items. Notably, in the present configuration, the controller 72 corresponds to one example of the judgment section and functions to judge whether or not the management data deviate from the standard conditions.

Here, a management data receiving process and a judgment process in the management-base-side apparatus 70 will be described specifically. It is assumed that, for example, Management data 2 of Time 2 (management data collected in the period between Time 1 and Time 2) in the example of FIG. 6 are transmitted from the production-base-side apparatus 10 to the management-base-side apparatus 70. In this case, the management-base-side apparatus 70 receives the Management data 2 and stores the Management data 2 in the storage section 78. Furthermore, the management-base-side apparatus 70 judges whether or not data of the respective items contained in the Management data 2 satisfy the standard conditions determined for the respective items. For example, the standard condition determined for the item of the breeding water temperature is that "the temperature of the breeding water falls within a range of Al to A2." Similarly, the standard condition determined for the dissolved oxygen concentration of the breeding water is that "the dissolved oxygen concentration of the breeding water falls within a range of B1 to B2." For other items, standard conditions suitable for the respective items are determined.

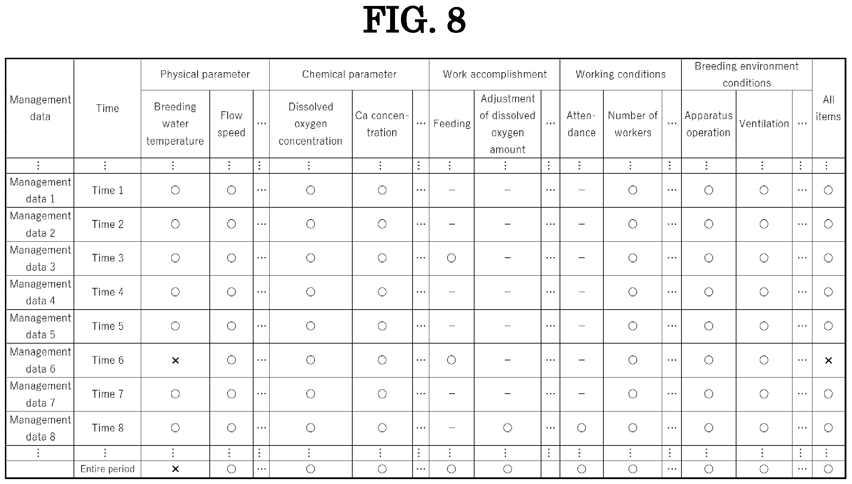

For example, in the case where management data which contain data representing the temperature of the breeding water, the flow speed of the breeding water, and dissolved oxygen concentration, the number of workers, apparatus operation, and presence/absence of ventilation as in the case of Management data 2 of Time 2 shown in FIG. 6 are transmitted from the production-base-side apparatus 10 to the management-base-side apparatus 70, the management-base-side apparatus 70 receives the Management data 2 and stores the Management data 2 in the storage section 78. When the management-base-side apparatus 70 stores the Management data 2 in the storage section 78, the management-base-side apparatus 70 may perform a process for preventing alteration of the management data. Furthermore, the management-base-side apparatus 70 determines whether or not the items contained in the Management data 2 (i.e., the temperature of the breeding water, the flow speed of the breeding water, the dissolved oxygen concentration, the number of workers, the state of apparatus operation, and the state of ventilation) satisfy the standard conditions set for the respective items. For example, the management-base-side apparatus 70 determines whether or not the temperature of the breeding water falls within the temperature range of Al to A2. In the case where the temperature of the breeding water falls within the temperature range (the standard condition is satisfied), the management-base-side apparatus 70 adds "data showing that the temperature of the breeding water satisfies the standard condition" to data representing the results of judgment (hereinafter referred to as "the data of the judgment result") of the Management data 2. Similarly, the management-base-side apparatus 70 determines whether or not the dissolved oxygen concentration of the breeding water falls within the concentration range of B1 to B2. In the case where the dissolved oxygen concentration of the breeding water falls within the concentration range (the case where the standard condition is satisfied), the management-base-side apparatus 70 adds "data showing that the dissolved oxygen concentration of the breeding water satisfies the standard condition" to the data of the judgment result of the Management data 2. In this manner, the management-base-side apparatus 70 generates the data of the judgment result of the Management data 2 and stores the data of the judgment result in the storage section 78. When such judgment result data are generated for each management data set, the data of the judgment result for each management data set as shown in FIG. 8 can be stored in the storage section 78. Notably, in FIG. 8, the judgment results of the items determined to satisfy the corresponding standard conditions are represented by "O," and the judgment results of the items determined not to satisfy the corresponding standard conditions are represented by "X."

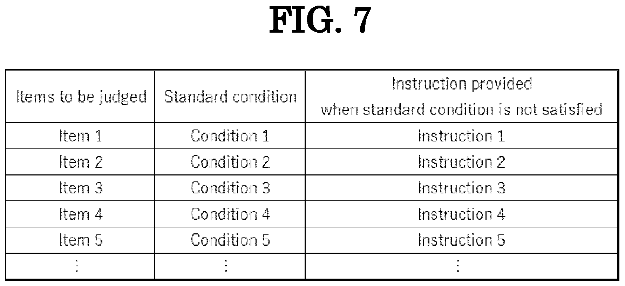

As described above, each time the management-base-side apparatus 70 receives management data, the management-base-side apparatus 70 investigates the data of the respective items contained in the management data (judges whether or not the data satisfy the corresponding standard conditions). In the case where the data of a certain item in a certain management data set do not satisfy the corresponding standard condition, the management-base-side apparatus 70 transmits a work instruction related to that item to the production-base-side apparatus 10, which is a sender of the management data. Specifically, as shown in FIG. 7, for each item, a work instruction which is provided when data of the item deviate from the corresponding standard condition is determined. For example, the work instruction related to Item 1 is a work instruction which is transmitted to the production-base-side apparatus, which is a sender of the management data, when data of Item 1 contained in the management data deviate from the standard condition. The work instruction includes at least one instruction selected from instructions for feeding, feeding amount adjustment, water exchange, water pouring, exchange or cleaning of a filter, adjustment of the dissolved oxygen amount, supply of mineral components, supply of microorganisms, water temperature adjustment, water flow adjustment, and checking of the physique of aquatic produce.

For example, in the case where Item 1 shown in FIG. 7 is feeding work, the data of Item 1 may be, for example, "data specifying whether or not feeding work has been performed at a normal time (for example, in a period between time 1 to time 2)." The standard condition for Item 1 may be, for example, that "feeding work has been performed at the normal time," and the work instruction related to Item 1 may be "feeding." In such a case, when the data of Item 1 contained in the management data transmitted from the production-base-side apparatus 10 are "data indicating that feeding work has not been performed at the normal time," the data of Item 1 of the management data are judged not to satisfy the corresponding standard condition, and the work instruction related to Item 1 (a work instruction for "feeding") is transmitted from the management-base-side apparatus 70 to the production-base-side apparatus 10, which is a sender of the management data. Therefore, a piece of information informing that feeding has not yet been performed can be provided to a production base at which the production-base-side apparatus 10 is provided. Notably, together with the work instruction related to Item 1, a piece of warning information informing that Item 1 does not satisfy the standard range may be transmitted to the production-base-side apparatus 10, which is the sender of the management data.

In the case where Item 2 shown in FIG. 7 is "the nitric acid concentration of the breeding water," the data of Item 2 may be, for example, "data representing the nitric acid concentration of the breeding water." The standard condition for Item 2 may be that "the nitric acid concentration falls within a range of D1 or less," and the work instruction related to Item 2 may be "water exchange." In such a case, when the data of Item 2 contained in the management data transmitted from the production-base-side apparatus 10 are "data deviating from the range of D1 or less," the data of Item 2 of the management data are judged not to satisfy the corresponding standard condition, and the work instruction related to Item 2 (a work instruction for "water exchange") is transmitted from the management-base-side apparatus 70 to the production-base-side apparatus 10, which is the sender of the management data. Therefore, a piece of information informing that water exchange must be performed can be provided to the production base at which the production-base-side apparatus 10 is provided. Notably, together with the work instruction related to Item 2, a piece of warning information informing that Item 2 does not satisfy the standard range may be transmitted to the production-base-side apparatus 10, which is the sender of the management data.

In the case where Item 3 shown in FIG. 7 is "the dissolved oxygen concentration of the breeding water," the data of Item 3 may be, for example, "data representing the dissolved oxygen concentration of the breeding water." The standard condition for Item 3 may be that "the dissolved oxygen concentration falls within a range of B1 to B2," and the work instruction related to Item 3 may be "adjustment of the dissolved oxygen concentration." In such a case, when the data of Item 3 contained in the management data transmitted from the production-base-side apparatus 10 are "data deviating from the range of B1 to B2," the data of Item 3 of the management data are judged not to satisfy the corresponding standard condition, and the work instruction related to Item 3 (a work instruction for "adjustment of the dissolved oxygen concentration") is transmitted from the management-base-side apparatus 70 to the production-base-side apparatus 10, which is the sender of the management data. Therefore, a piece of information informing that adjustment of the dissolved oxygen concentration must be performed can be provided to the production base at which the production-base-side apparatus 10 is provided. Notably, together with the work instruction related to Item 3, a piece of warning information informing that Item 3 does not satisfy the standard range may be transmitted to the production-base-side apparatus 10, which is the sender of the management data.

In the case where Item 4 shown in FIG. 7 is "the temperature of the breeding water," the data of Item 4 may be, for example, "data representing the temperature of the breeding water." The standard condition for Item 4 may be that "the temperature of the breeding water falls within a range of Al to A2," and the work instruction related to Item 4 may be "water pouring." Notably, the temperature and amount of water to be poured are adjusted appropriately in accordance with the temperature of the breeding water. In such a case, when the data of Item 4 contained in the management data transmitted from the production-base-side apparatus 10 are "data deviating from the range of Al to A2," the data of Item 4 of the management data are judged not to satisfy the corresponding standard condition, and the work instruction related to Item 4 (a work instruction for "water pouring") is transmitted from the management-base-side apparatus 70 to the production-base-side apparatus 10, which is the sender of the management data. Therefore, a piece of information informing that water pouring must be performed can be provided to the production base at which the production-base-side apparatus 10 is provided. Notably, together with the work instruction related to Item 4, a piece of warning information informing that Item 4 does not satisfy the standard range may be transmitted to the production-base-side apparatus 10, which is the sender of the management data.

In the case where Item 5 shown in FIG. 7 is "an operation of exchanging the filter," the data of Item 5 may be, for example, "data specifying whether or not the operation of exchanging the filter has been performed within a predetermined period." The standard condition for Item 5 may be, for example, that "the operation of exchanging the filter has been performed within the predetermined period," and the work instruction related to Item 5 may be "exchange of the filter." In such a case, when the data of Item 5 contained in the management data transmitted from the production-base-side apparatus 10 are "data representing that the operation of exchanging the filter has not been performed within the predetermined period," the data of Item 5 of the management data are judged not to satisfy the corresponding standard condition, and the work instruction related to Item 5 (a work instruction for "exchange of the filter") is transmitted from the management-base-side apparatus 70 to the production-base-side apparatus 10, which is the sender of the management data. Therefore, a piece of information informing that exchange of the filter must be performed can be provided to the production base at which the production-base-side apparatus 10 is provided. Notably, together with the work instruction related to Item 5, a piece of warning information informing that Item 5 does not satisfy the standard range may be transmitted to the production-base-side apparatus 10, which is the sender of the management data.

In this example, the controller 72 corresponds to one example of the processing section and functions to perform a process corresponding to the result of the judgment by the judgment section. Specifically, the controller 72 functions to transmit a work instruction to the production-base-side apparatus 10 in the case where the judgment section judges that the management data deviate from the standard condition. Notably, in the case where the work instruction cannot be transmitted from the management-base-side apparatus 70 to the production-base-side apparatus 10 because of, for example, a malfunction of the communication environment, it is only necessary for the management-base-side apparatus 70 to transmit the work instruction to the production-base-side apparatus 10 when the malfunction of the communication environment is fixed.

### 4. Example in which relevant information is stored

In the above-described example, when the management-base-side apparatus 70 receives management data, the management-base-side apparatus 70 stores the management data themselves in the storage section 78. However, instead of or in addition to the method of storing the management data themselves in the storage section 78, a piece of relevant information produced as a result of processing or inspecting the management data may be stored. Here, the processing of the management data includes accumulation and analysis of the management data and generation of prediction data based on the management data. An example of the prediction data is an optimal water exchange timing predicted on the basis of the accumulated data. The relevant information generated as a result of processing of the management data may be encrypted data obtained by encrypting the management data, data obtained by statistically processing the management data (for example, data of the average value), or data obtained by removing a portion of the management data randomly or in accordance with a predetermined rule (data obtained by extracting only some of a plurality of management data sets, etc.). The relevant information generated as a result of inspection of the management data is, for example, the result of judgment which is performed by the management-base-side apparatus 70, when the management-base-side apparatus 70 receives management data, so as to judge whether or not the management data satisfy the standard by the above-described method and which is stored in the storage section 78. For example, the management-base-side apparatus 70 may store only the data of the judgment results as shown in FIG. 8 in the storage section 78. Alternatively, after performing the above-described judgment, the management-base-side apparatus 70 may store only data which do not satisfy the corresponding standard conditions or may store only data which satisfy the corresponding standard conditions.

### 5. Example in which certification information is stored

In the above-described example, when the management-base-side apparatus 70 receives management data, the management-base-side apparatus 70 stores the management data themselves in the storage section 78. However, instead of or in addition to the method of storing the management data themselves in the storage section 78, a piece of certification information produced in response to reception of the management data may be stored in the storage section 78. For example, the management-base-side apparatus 70 performs judgement for all the items over the entire period as shown in FIG. 8. After that, when data of all the items satisfy the corresponding standard conditions over the entire period, the management-base-side apparatus 70 may store a piece of information to that effect as certification information (certification information informing that data of all the items satisfy the corresponding standard conditions over the entire period). When such a piece of certification information is stored, it is possible to keep a proof of "the fact that production which satisfies standard conditions has been performed over the entire period at the production base which is the sender of that management data," and such a proof (certification information) can be utilized in various ways so as to enhance the reliability of the production base.

Alternatively, in the case where a situation in which data of all the items do not satisfy the corresponding standard conditions does not occur continuously beyond a certain period of time in the entire period, the management-base-side apparatus 70 may store a piece of certification information to that effect. For example, in the case where each item is judged over the entire period, the following may occur. Even when a certain item does not satisfy the corresponding standard condition at a certain time, the situation in which the certain item does not satisfy the corresponding standard condition may end within a certain period of time after the judgment result indicating that the certain item does not satisfy the corresponding standard condition is obtained. In such a case, it is possible to judge that the situation in which data of the certain item do not satisfy the corresponding standard condition does not occur continuously beyond the certain period of time in the entire period. In all the cases where a standard condition(s) is not satisfied, when such a situation ends as described above, the management-base-side apparatus 70 may store a piece of certification information to that effect (a piece of certification information informing that the situation in which all the items do not satisfy the corresponding standard conditions over the entire period does not occur continuously beyond the certain period of time).

Notably, the stored certification information is not limited to these examples. For example, in the case where the ratio of judgments indicating unsatisfaction of standard conditions to the judgments over the entire period is equal to or less than a certain ratio, the management-base-side apparatus 70 may store a piece of certification information to that effect. Alternatively, in the case where data of specific items satisfy all the corresponding standard conditions over the entire period, the management-base-side apparatus 70 may store a piece of certification information to that effect.

### 6. Example in which management data , relevant information, and certification information are output

In the above description, there has been shown examples in which the management-base-side apparatus 70 stores at least one of management data themselves, the above-described relevant information, and the above-described certification information. However, the management-base-side apparatus 70 may output at least one of these pieces of information. Specifically, the management-base-side apparatus 70 may transmit at least one of the above-described management data, the above-described relevant information, and the above-described certification information to other apparatuses (for example, a server provided at a remote location that is far from the management-base-side apparatus 70) or may upload them to a storage, a database, a server, or the like by utilizing cloud computing. Furthermore, the management-base-side apparatus 70 may output at least one of these pieces of information in the form of a document by printing them by the printing section 42.

### 7. Examples of effects of the present configuration

In the produce management system 1 of the present configuration, the production-base-side apparatus 10 can output "management data generated or input in a process of breeding produce at the production base." The management-base-side apparatus 70 can obtain the management data output by the production-base-side apparatus 10. Therefore, it becomes possible to manage, at the management base, the data generated in the process of breeding the produce at the production base. When the management-base-side apparatus 70 obtains the above-described management data, the management-base-side apparatus 70 stores or outputs at least one of the "management data," "relevant information generated as a result of processing or inspection of the management data," and "certification information generated in response to reception of the management data." In the case where the management data themselves which are transmitted from the production base side in association with breeding of the produce at the production base, the above-described relevant information, or the above-described certification information is stored in the management-base-side apparatus, it is possible to accumulate in the management-base-side apparatus pieces of information for judging whether or not the breeding of the produce is properly performed at the production base. Also, it becomes possible to generate predication data by analyzing the accumulated data. Similarly, by outputting the management data themselves, the above-described relevant information, or the above-described certification information from the management-base-side apparatus 70, it is possible to allow an apparatus which receives the output or a person who receives the output to obtain the pieces of information for judging whether or not the breeding of the produce is properly performed at the production base. In either case, it becomes possible to manage the management data transmitted from the production base, the relevant information, or the certification information on the management base side independently of the production base, which is advantageous for certifying that the breeding of the produce is performed properly at the production base or taking some actions on the basis of the management data (for example, issuance of an instruction to the production base, analysis and study of the management data, generation of prediction information on the basis of the management data, practical use of the prediction information, etc.).

In the produce management system 1, the management-base-side apparatus 70 has the judgment section which judges whether or not the obtained management data satisfy the standard condition set beforehand, and the processing section which transmits a work instruction to the production-base-side apparatus 10 when the judgment section judges that the management data do not satisfy the standard condition. In the case where the management-base-side apparatus 70 has the above-described judgment section and the above-described processing section, it is possible to judge, at the management base, whether or not the management data satisfy the standard condition and provide a work instruction to the production base, which is the sender of the management data, when the management data do not satisfy the standard condition. Therefore, at the production base, it is possible to correct matters associated with breeding in accordance with this work instruction, thereby optimizing the matters associated with production. Also, as a result of repetition of the process of breeding the produce, the management data are accumulated. Further improvement becomes possible by performing analysis and prediction on the basis of the accumulated management data.

Furthermore, the above-described work instruction includes at least one instruction selected from instructions for feeding, feeding amount adjustment, water exchange, water pouring, exchange or cleaning of a filter, adjustment of the dissolved oxygen amount, supply of mineral components, supply of microorganisms, water temperature adjustment, water flow adjustment, and checking of the physique of aquatic produce. In the case where, as described above, the above-described instruction (an instruction selected from instructions for feeding, feeding amount adjustment, water exchange, water pouring, exchange or cleaning of a filter, adjustment of the dissolved oxygen amount, supply of mineral components, supply of microorganisms, water temperature adjustment, water flow adjustment, and checking of the physique of aquatic produce) can be provided from the management base to the production base when the management data do not satisfy the standard condition, it becomes possible to correct the produce breeding environment, and it becomes more easier to optimize the production at the production base. For example, at the production base, it is possible to pay attention to or correct at least one of feeding, feeding amount adjustment, water exchange, water pouring, exchange or cleaning of a filter, adjustment of the dissolved oxygen amount, supply of mineral components, supply of microorganisms, water temperature adjustment, water flow adjustment, and checking of the physique of aquatic produce. If it is possible to provide a more specific prompting instruction to the production base for paying attention or making corrections as described above, it become further easier to optimize the production at the production base.

In the produce management system 1, the management data contain at least one kind of data selected from a physical or chemical parameter, working conditions of a worker, a work report, and breeding environment conditions. In the case where the management data contain such kind of data, it becomes possible to obtain on the management base side at least one element selected from the physical or chemical parameter generated in the process of breeding the produce at the production base, the working conditions of the worker, the work report, and the breeding environment conditions, thereby enabling management of that element on the management base side. Notably, the management data may contain data of, for example, an item corresponding to compliance of a legal regulation, traceability of feed, energy consumption amount, and the discharge amount of greenhouse gas.

For example, in the case where the management data contain "the physical or chemical parameter generated in the process of breeding the produce at the production base," the parameter itself, a piece of relevant information generated as a result of processing or inspection of the parameter, or a piece of certification information generated in response to receipt of the parameter can be used as "the information for judging whether or not breeding of the produce is performed properly at the production base." The obtained information for judgment is useful for certifying that breeding of the produce is performed properly at the production base, providing instructions to the production base on the basis of the management data, and performing analysis and study of the management data, etc. In the case where the management data contain the working conditions, the work report, the breeding environment conditions, etc., these management data can be used as evidence for proving that the produce has been bred under proper conditions, whereby a procedure of application to a certification body which certifies the safety and quality of the produce can be performed reliably and simply.

Also, the produce management system 1 includes a plurality of production-base-side apparatuses 10A, 10B, and 10C. The plurality of production-base-side apparatuses 10A, 10B, and 10C are provided at a plurality of production bases Bp1, Bp2, and Bp3, respectively. In the case where the production-base-side apparatus 10 is provided at each of the plurality of production bases Bp1, Bp2, and Bp3, it is possible to transmit the management data from each of the plurality of production bases Bp1, Bp2, and Bp3 to the management base Bm, and, at the management base Bm, the management data sets can be managed collectively independently of each production base.

### <Other embodiments>

The present invention is not limited to the embodiment described by the above description with reference to the drawings. For example, the features of the above-described embodiment and embodiments which will be described below can be combined in any manner so long as no contradiction occurs. Also, any of the features of the above-described embodiment and embodiments which will be described below may be omitted unless explicitly stated as essential. Moreover, the above-described embodiment may be modified as follows.

In the above-described embodiment, only the management-base-side apparatus 70 has the above-described judgment section and the above-described processing section. However, the production-base-side apparatus 10 may have a second judgment section and a second processing section. For example, the production-base-side apparatus 10 may have a second judgment section which judges whether or not management data satisfy a standard condition set beforehand and a second processing section which outputs a work instruction when the second judgment section judges that the management data do not satisfy the standard condition. In this case, the controller 12 corresponds to one example of the second judgment section and functions to judge whether or not the management data deviate from the standard condition, and the controller 12 corresponds to one example of the second processing section and functions to perform a process corresponding to the result of the judgment by the second judgment section. In the example as described above, the judgment method in the case where the controller 12 (the second judgment section) determines "whether or not the management data deviate from the standard condition" may be the same as or differ from the judgment method of the above-described controller 72 (the judgment section) (the judgment method in the case where the controller 72 judges whether or not the management data deviate from the standard condition). Also, the method of selecting a work instruction that the controller 12 (the second processing section) outputs within the production base when the controller 12 (the second judgment section) judges that the management data do not satisfy the standard condition may be the same as or different from the selecting method of the above-described controller 72 (the processing section) (the method of selecting a work instruction that the controller 72 (the processing section) selects to be transmitted to the production-base-side apparatus 10 when the controller 72 (the judgment section) judges that the management data do not satisfy the standard condition).

As described above, in the case where the production-base-side apparatus 10 has the above-described second judgment section and the above-described second processing section, it is possible to judge, at the production base, whether or not the management data satisfy the standard condition and provide a work instruction to an apparatus within the production base when the management data do not satisfy the standard condition. As a result, even in the case where a network between the management-base-side apparatus 70 and the production-base-side apparatus 10 is interrupted due to, for example, a malfunction of the communication environment, it is possible to output a work instruction from the production-base-side apparatus 10. For example, it becomes possible to output a work instruction to the display section 40 of the production-base-side apparatus 10 when the management data do not satisfy the standard condition or output a work instruction to another apparatus within the production base when the local area network within the production base is not interrupted.

In the above-described embodiment, "aquaculture" for culturing an aquatic organism such as Crustacea is shown as an example of breeding of produce. In the case where the present invention is applied to "aquaculture," the aquaculture may be "aquaculture in which aquatic produce is cultured in water containing salt" or "aquaculture in which aquatic produce is cultured in water containing no salt."

In the above-described embodiment, one example of "management of culturing of an aquatic organism" is shown as an example of "management of breeding of a product" in the produce management system. However, the "management of breeding of a product" may be "growth management in the marine produce industry," "growth management in agriculture," "growth management in the stock-raising industry," "growth management in forestry," etc., or may be growth management in other primary industries. Also, the growth management may manage the growth of produce over the entire process, from birth to shipment, or manage the growth of the produce over a part of the process.

In the above-described embodiment, an example in which one production-base-side apparatus is provided at one production base is shown. However, a plurality of production-base-side apparatuses may be provided at one production base. Also, a plurality of management-base-side apparatuses may be provided at one management base. In this case, each of the plurality of management-base-side apparatuses may be configured to be capable of receiving management data from each production-base-side apparatus.

In the above-described embodiment, an example in which only one management base is provided and only one management-base-side apparatus is provided is shown. However, two or more management bases may be present, and a management-base-side apparatus may be provided at each management base.

In the above-described embodiment, an example in which the number of the production bases is three is shown. However, a single production base may be provided, and one or more production-base-side apparatuses may be provided at the one production base. Alternatively, the number of the production bases may be two, four, or more. In this case, it is sufficient that one or more production-base-side apparatuses are provided at each production base.

In the above-described embodiment, an example in which the production-base-side apparatus 10 transmits management data toward the management-base-side apparatus 70 and the management-base-side apparatus 70 receives the management data transmitted from the production-base-side apparatus 10 thereto is shown. However, the present invention is not limited to this example. For example, the production-base-side apparatus 10 may transmit (for example, upload) management data to an external storage system (storage, database, server, etc.) disposed at a location different from the production-base-side apparatus 10 and the management-base-side apparatus 70 by using cloud computing or the like. In this case, the method of transmitting management data from the production-base-side apparatus 10 to the external storage system may be a method of automatically uploading the management data in response to satisfaction of a predetermined condition (for example, a condition that a prescribed transmission time has come or a condition that a prescribed amount of management data have been accumulated), a method of uploading the management data in response to an operation performed by a worker, or any of other methods. In this case, it is only necessary for the management-base-side apparatus 70 to obtain the management data by receiving (for example, downloading) the management data from the above-described external storage system. The method by which the management-base-side apparatus 70 receives the management data from the above-described external storage system may be a method of automatically downloading the management data in response to satisfaction of a predetermined condition (for example, a condition that execution of the above-described uploading has been completed, a condition that a prescribed transmission time has come, or a condition that a prescribed amount of uploaded data have been accumulated), a method of downloading the management data in response to an operation performed by a worker, or a method of obtaining the management data through browsing.

Notably, the embodiments disclosed this time should be considered to be illustrative and not to be restrictive in all aspects. The scope of the present invention is not limited to the embodiments disclosed this time, and it is intended that the present invention encompasses all modifications within the range shown by the claims and the range of equivalents of the claims.

### REFERENCE SIGNS LIST

1: produce management system 10: production-base-side apparatus
12: controller (second judgment section, second processing section)
70: management-base-side apparatus
72: controller (judgment section, processing section)
Bm: management base
Bp1, Bp2, Bp3: production base

## Claims

1. A produce management system for managing breeding of produce, comprising:
a production-base-side apparatus which is provided at a production base for the produce and outputs data; and
a management-base-side apparatus which is provided at a management base and obtains the data,
wherein the production-base-side apparatus outputs management data generated or input in a process of breeding the produce at the production base, and
the management-base-side apparatus stores or outputs at least one of the management data, a piece of relevant information generated as a result of processing or inspection of the management data, and a piece of certification information generated in response to reception of the management data, when the management-base-side apparatus obtains the management data.

2. The produce management system according to claim 1, wherein the management-base-side apparatus includes:
a judgment section which judges whether or not the obtained management data satisfy a standard condition set beforehand; and
a processing section which transmits a work instruction to the production-base-side apparatus when the judgment section judges that the management data do not satisfy the standard condition.

3. The produce management system according to claim 1 or 2, wherein the production-base-side apparatus includes:
a second judgment section which judges whether or not the management data satisfy a standard condition set beforehand; and
a second processing section which outputs a work instruction within the production base when the second judgment section judges that the management data do not satisfy the standard condition.

4. The produce management system according to claim 2 or 3, wherein the work instruction includes at least one instruction selected from instructions for feeding, feeding amount adjustment, water exchange, water pouring, exchange or cleaning of a filter, adjustment of dissolved oxygen amount, supply of mineral components, supply of microorganisms, water temperature adjustment, water flow adjustment, and checking of the physique of aquatic produce.

5. The produce management system according to any one of claims 1 to 4, wherein the management data includes at least one kind of data selected from a physical or chemical parameter, working conditions of a worker, a work report, and breeding environment conditions.

6. The produce management system according to any one of claims 1 to 5, comprising a plurality of the production-base-side apparatuses which are provided at a plurality of production bases, respectively.
